# EUROPEAN PATENT SPECIFICATION

(11) **EP 0 817 808 B1**
(45) Date of publication and mention of the grant of the patent: **27.06.2001**
(21) Application number: 96912408.0
(22) Date of filing: 06.03.1996
(51) Int. Cl.: C08G 18/10, C08G 18/32, C08G 18/76

(54) **POLYURETHANE CURATIVE SYSTEMS AND ELASTOMERS**
POLYURETHAN-HÄRTER-SYSTEME SOWIE ELASTOMERE
SYSTEMES PERMETTANT D'OBTENIR PAR VULCANISATION DES ELASTOMERES DE POLYURETHANE

(30) Priority: 28.03.1995 US 412040
(43) Date of publication of application: 14.01.1998
(73) Proprietor: UNIROYAL CHEMICAL COMPANY, Inc., Middlebury Connecticut 06749 (US)
(72) Inventor: GAJEWSKI, Vincent, John, Cheshire, CT 06410 (US); RICCI, Vincent, Prospect, CT 06712 (US)
(74) Representative: Spott, Gottfried, Dr.
(86) International application number: US9603204
(87) International publication number: WO9630424

(56) References cited:
- EP-A- 0 320 736
- GB-A- 1 159 504
- GB-A- 2 041 387
- US-A- 2 883 359
- US-A- 3 781 238
- US-A- 3 892 713

## Description

### BACKGROUND OF THE INVENTION

### FIELD OF THE INVENTION

This invention relates to curative systems for polyurethane. More specifically, the invention relates to a method of curing a polyurethane, a curative composition useful in such method, and a cured polyurethane produced by such method. In particular, polyether-TDI prepolymers are cured with a combination of a dihydroxy substituted C₁-C₁₈ alkyl, C₄-C₁₀ cycloalkyl, or aryl tertiary amine, preferably phenyldiethanolamine (PDEA), one or more short chain diol (or diols), and one or more short chain triols to give desirable low Shore A durometer hardness, high tear strength, and good compression set properties with excellent hydrolysis resistance.

### BACKGROUND AND RELATED ART

Polyurethane prepolymers are made from the reaction of an organic isocyanate compound with a hydroxy containing material, such as a polyol. The prepolymers are further cured to yield a polyurethane. In some processes, prepolymers of isocyanates and polyols are prepared and further reacted with chain extenders, or curatives. On cross-linking, a variety of polymers can be produced, depending on the selection of materials and processes.

Certain applications of polyurethane elastomers require the use of low Shore A durometer materials, specifically, with Shore A hardness values of less than 60A. Examples of such applications include, but are not limited to graphic arts coating rollers, couch rolls for the paper industry, cardboard processing rolls, baseball wheel machines, mixing screens, and various industrial wheels and trim.

In conventionally known polyether polyurethanes, a hardness which is below 60 Shore A causes a loss of some mechanical properties, especially tear strength and compression set. Loss of tear strength render these polyether polyurethane materials impractical for use in many industrial applications, including the specific applications mentioned above. Certain polyester polyol based TDI prepolymers give some of the improved physical properties but suffer from poor hydrolysis resistance. MDI based prepolymers do not readily yield low hardness polyurethanes with conventional curatives.

Polyether polyurethanes offer advantages in terms of good hydrolysis and fungal-growth resistance of the end product. Polyethers are more resistant to fungal resistance and mildews which are waterborne. These resistance qualities are becoming increasingly important as more industrial and chemical processes and systems are being re-engineered toward environmentally friendly waterborne systems. This trend toward water based or water-borne systems eliminates the use of traditional solvents in many industries and answers many environmental and safety concerns.

Unfortunately, until this invention there has not been a way to produce polyether polyurethane elastomers with low hardness (as measured by Shore A durometer) which have good hydrolysis resistance and high tear strength as well as good compression set properties. The curing agents which are usually used for polyether urethanes, such as 4,4'-methylenebis(2-chloroaniline) [MBOCA] have disadvantages such as toxicity and long curing cycles and they do not produce polyether polyurethanes with the desired combination of low Shore A hardness, high tear strength, and good compression set properties.

US Patent No. 3,892,713 to Burkus, et al. teaches the use of phenyldiethanolamine (PDEA) in very small quantities as a catalyst with triisopropanol amine to speed up the demold time only when used with primary curatives 1,4-butanediol (BD) or hydroquinone bis(beta-hydroxyethyl) ether. All the elastomers exemplified in Burkus, et al. had Shore A durometer hardness of 72 to 90. All the prepolymers utilized were all based on MDI, (p, p'-diphenylmethane diisocyanate).

There has been a long felt need in the art for a curative or curative system which would allow the use of polyether-TDI based polyurethanes with their excellent hydrolysis resistance in applications requiring the combination of low Shore A durometer hardness, high tear strength, and good compression set properties.

It is an object of this invention to demonstrate curatives capable of curing a polyether-TDI prepolymers. It is a further object of the invention to produce a polyurethane elastomer with low Shore A hardness, high tear strength, and good compression set properties. A still further object would be to produce a polyether-TDI polyurethane elastomer with low Shore A hardness, high tear strength, and good compression set properties. The curative blends of this invention also use other known polyurethane curatives, such as 1,4-butanediol, trimethylolpropane, and triisopropanolamine. The unique properties of the curative blends are optimally produced by the use of these diols and triols with phenyldiethanolamine (PDEA) in certain proportions, as will be disclosed shortly.

### SUMMARY OF THE INVENTION

In accordance with this invention, it has now been discovered that by curing the polyether polyol-TDI prepolymer with a particular curative system yields the desired combination of low Shore A durometer hardness, high tear strength, and good compression set properties with excellent hydrolysis resistance. The curative mixture comprises a dihydroxy substituted C₁-C₁₈ alkyl, C₄-C₁₀ cycloalkyl, or aryl tertiary amine, preferably phenyldiethanolamine (PDEA), one or more short chain diol (or diols), and one or more short chain triols. Other additives, such as plasticizer, may optionally be added as well as catalysts, colorants, stabilizers, and the like.

### DETAILED DESCRIPTION OF THE INVENTION

Polyurethanes are diverse specialty elastomers with many forms and uses. Both thermoset and thermoplastic types are available and they may be produced by solution, suspension, or melt polymerization from a variety of monomers, polyols, and curatives.

The polyethers used in preparing the polyurethane elastomer of this invention are polyethers having a terminal functional group containing active hydrogen capable of reacting with an isocyanate group. The functional group is selected from the group consisting of hydroxyl group, mercapto group, amino group and carboxyl group. Suitable polyethers include the polyether polyols and, in particular, poly(oxyalkylene) ether glycols such as the poly(oxyethylene) ether glycols, the poly(oxypropylene) ether glycols, the polytetramethylene ether glycols, polyoxybutylene ether glycols, poly(oxyalkylene) ether triols such as the poly(oxypropylene) ether triols, and the like, poly(oxyalkylene) ether dicarboxylic acids, the poly(oxyalkylene) ether dithiols, the poly(oxyalkylene) ether diamines and their pre-extended polymers, and so forth. The preferred polyethers are the poly(oxyalkylene) ether glycols, the more preferred polyethers being the polytetramethylene ether glycols (PTMEGs).

The polyether prepolymer is formed by reacting an excess of organic diisocyanate with a long-chain glycol. In the instant invention, the glycol is a polyether which is then reacted with a multifunctional isocyanate. The molar ratio of diisocyanate to glycol should be greater than one.

Polyfunctional isocyanates used in this invention are the tolylenediisocyanates- TDI's- which include, for example tolylene-2,4-diisocyanate and tolylene-2,6-diisocyanate and any isomer blend thereof. The commonly available isomer blends of 2,4-/2,6-TDI include 100/0, 80/20, 65/35 and 0/100. Any isomer blend of the foregoing isomers benefits from the unique curatives of this invention. For many solid castable applications, including those of this invention, the toluene diisocyanate (TDI) is reacted with a polyol, such as polytetramethylene ether glycol, to form a prepolymer. The prepolymer is then cured with the curing compositions used according to this invention.

The curatives that have been found to generate elastomers with such properties are combinations of phenyldiethanolamine (PDEA), a diol or combination of diols, and various short chain triols. The amount of PDEA used in the curative of this invention may range from 10 to 80, preferably 40 to 80, weight percent of the curing components, discounting optional materials such as plasticizer, colorants, catalysts, stabilizers and the like. A more preferred amount ranges from 50 to 80%.

The diol, or bifunctional, portion of the curative may be present in an amount that ranges from 10 to 40 weight percent. The short chain diols are represented by such materials as 1,4-butanediol, ethylene glycol, cyclohexanedimethylol, and 1,6-hexanediol and other conventionally known diols in the urethane art.

The triol, or trifunctional curative component, such as trimethylolpropane or triisopropanol amine may be present in an amount which ranges from 10 to 20 weight percent. The short chain triols are those known in use in the polyurethane art represented by such materials as trimethylolpropane, triisopropanolamine, triethanolamine, glycerol, ethylene oxide adduct of trimethylolpropane, trimethylolethane and the ethylene oxide adduct of trimethylolethane.

For curing these prepolymers, the number of -OH groups in the curative package should be approximately equal to the number of -NCO groups in the prepolymer. Another expression of this equivalent ratio concept is the percentage of equivalents of reactive hydrogen in the curative compounds to active isocyanate sites. The amount of curative that is reacted with the above described polyether prepolymer would optimally be calculated on a molar equivalent or stoichiometric basis. Variation is permissible but in general this molar equivalent relationship will range from 70 to about 110%. A more preferable equivalents ratio will range from 85 to 100 percent. A still more preferable equivalents ranges from 90 to 98 percent.

Other ingredients may comprise the polyurethane elastomer product of this invention, including but not limited to plasticizer, colorants, stabilizers, and catalysts.

Typical curing conditions as useful in this invention are from 1 to 36 hours at from 180°F to 300°F (82 to 150°C). Preferably from 4 to 24 hours at from 200°F to 290°F(94 to 143°C) and most preferable from 8 to 16 hours at 212 to 270°F (100 to 132°C).

When conventional curatives are used by those skilled in the art to obtain low durometer polyether elastomers, low tear strengths are also obtained. Commonly used polyurethane curatives include a wide variety of conventional and well known organic diamines, polyol materials, or alkyl thio aromatic amines. The latter type of curative have been used in the comparative examples contained herein.

Representative of these types of conventional curative materials include 4,4'-methylene-bis(3-chloro)aniline (MBCA), 4,4'-methylene-bis(3-chloro-2,6-diethyl)aniline (MCDEA), diethyl toluene diamine (DETDA), tertiary butyl toluene diamine (TBTDA), dimethylthio-toluene diamine (Ethacure™ 300) from Ethyl Corporation, trimethylene glycol di-p-amino- benzoate (Polacure™ 740) from Polaroid Corporation, and 1,2-bis(2-aminophenylthio)ethane (Cyanacure from American Cyanamid Company).

In the polyurethane art, properties such as tensile strength, tear strength, hardness, and others can be designed through the selection of various polyol, prepolymer, isocyanate, and curative types. It is known that the use of polyester polyols leads to better oil resistance and poorer water resistance due to hydrolysis of the polyester. In contrast, polyether polyols give products that are more sensitive to oil but less susceptible to hydrolysis.

Polyesters are also known to retain tear strength and compression set properties at low hardness levels. For the purposes of this invention 'low hardness' will mean a Shore A Durometer values ranging from about 20 to about 60. Shore Hardness is defined as a value of specific degree of hardness as obtained from the Shore hardness tester called a durometer. This tester is a small pocket-type instrument which gives a measure of the resistance of an elastomer surface to penetration of a blunt point pressed onto the surface. (As defined in ASTM Special Technical Publication No. 184, Glossary of Terms relating to Rubber and Rubber-Like Materials, 1956.)

Common ASTM D 1938 tear strength values are usually well below 20 for most polyether polyurethane elastomers cured with conventional systems. They are usually about half that of the polyester polyurethanes. In the examples of this invention, trouser tear values ranging from 34 to 66 were measured. For the purposes of this invention, 'high tear strength' will include those values for trouser tear greater than or equal to 30. The combination of low hardness and high tear strength will encompass a trouser tear value of 30 or higher and a Shore A hardness value ranging from about 20 to about 60, preferably 30 to 50.

In such uses as printing rolls or graphic arts coating rollers, the polyurethane elastomer used needs to have a hardness measurement of less than 60 Shore A. A polyester polyurethane with a Shore A harness of less than or about 60 retains its compression set, abrasion resistance and tear strength properties. It is, however, subject to degradation due to the hydrolysis of the polyester in the presence of water.

In today's industrial environment the use of aqueous-based systems is favored over solvents whenever possible due to the desire to minimize pollution and worker exposure to harmful materials. The increasing use of water-based systems in the printing and graphic arts industries is not amenable to the use of polyester polyurethanes used in rollers. These materials are subject to failure in use and require the expense and nuisance of frequent repair and/or replacement.

Polyether polyurethanes do not have the same performance problems in aqueous systems since they do not readily hydrolyze. However, use of polyether polyurethanes have not been feasible due to low tear strength at low durometer values, which may cause tearing of the rollers while in use in the stress of the application.

In accordance with this invention, curatives are disclosed which, when used to cure polyether isocyanate-terminated prepolymers, produce polyether polyurethane elastomers having the unique combination of Shore A durometer measurements of less than 60 A with significantly improved tear strength. Thus, polyether polyurethanes cured in this way will be able to enjoy use in the printing and graphic arts industry and possess tear strength and other desired physical properties at low Shore A durometer.

· When conventional curatives are used to obtain low durometer values for polyether polyurethane elastomers, low tear strengths result. These conventional curatives may be aromatic diamines used in combination with plasticizer (in order to reduce the hardness). They may be diols, triols, or polyols or combinations and may be used with or without plasticizer. When used with polyether polyurethane prepolymers, the elastomers so generated have low tear strength. These observations may be seen in Comparative Examples A-C which are presented in the Experimental section following this one.

Plasticizers are substances that soften another substance through solvent, lubricating, or chemical catalytic action. Among the plasticizer in common use and which have been used in the instant invention are dipropylene glycol dibenzoate, commercially available as Benzoflex™, 9-88, Velsicol Chemical Company. Other plasticizer in common use include such materials as tributoxyethylphosphate.

The examples of the invention and comparative examples were tested for Shore A hardness and tear strength. These values are presented in Table 1. As has been mentioned, the Shore A hardness is measured by the Shore hardness tester called a durometer. This tester is a small pocket-type instrument which gives a measure of the resistance of an elastomer surface to penetration of a blunt point pressed onto the surface. The method used to determine durometer hardness is referenced in ASTM Method D2240-91. The tear strength is measured by ASTM method D-1938-92, Standard Test Method for Tear Propagation Resistance of Plastic Film and Thin Sheeting by a Single Test Method.

The TDI prepolymers are prepared by reacting any of the toluene diisocyanates isomers used alone or in combination with any other conventional diisocyanates optionally used, adding the polyol or polyol blend, and maintaining the temperature from room temperature to temperatures as high as 150°C for times necessary to react all the available hydroxyl groups. Preferred reaction temperatures are 30°C to 100°C; more preferred are 50°C to 85°C.

· US Patent No. 3,892,713 to Burkus, et al. taught the use of phenyldiethanolamine (PDEA) in very small quantities as a catalyst with triisopropanol amine to speed up the demold time only when used with primary curatives 1,4-butanediol (BD) or hydroquinone bis(beta-hydroxyethyl) ether. The equivalent ratios described, exemplified and claimed in Burkus, et al. utilized Diol : (PDEA plus Triol) equivalent ratios of from 17:1 to 2.5:1. This invention went against this conventional wisdom by recognizing the value of utilizing large amounts of PDEA with small amounts of short chain Triols and Diols in TDI based polyether polyols. In this invention, by utilizing the same equivalent ratio calculation as used in Burkus (Diol : PDEA plus Triols), the equivalents ratios would range from 0.2:1 to 2:1, preferably 0.2:1 to 1.75:1, and most preferably 0.4:1 to 1:1. These ranges give very desirable Shore A durometer hardnesses of about 20 to 60, with excellent tear strengths.

The following examples are illustrative of the present invention and are therefore not intended as a limitation of the scope thereof.

### EXAMPLES

### Comparative Example A: Curing a Polyether Prepolymer with a Combination of an Aromatic Diamine and a Triol

A toluenediisocyante polytetramethylene ether prepolymer (Adiprene LF 800, supplied by Uniroyal Chemical Company, Inc.), with an isocyanate content of 2.85% was cured as follows: to 100 parts prepolymer was added 1 part dimethylthiotoluene diamine, and 6.17 parts ethoxylated trimethylolpropane of equivalent weight 91. Three different weights of dipropylene glycol dibenzoate, commercially available as Benzoflex™ 9-88, Velsicol Chemical Company were added: 35 parts, 20 parts, and 10 parts. These materials are listed in Table 1 as A1, A2, and A3, respectively with values for Shore A durometer and trouser tear strength.

### Comparative Example B: Curing a Polyether Prepolymer with Conventional Triols

· A toluenediisocyante polytetramethylene ether prepolymer (Adiprene LF 900, supplied by Uniroyal Chemical Company, Inc.), with an isocyanate content of 3.80% was cured as follows: to 100 parts prepolymer was added each of the following conventional curatives: 1) 5.2 parts triisopropanolamine, 2) 3.6 parts trimethylolpropane, 3) 11.9 parts propoxylated trimethylolpropane of equivalent weight 146, 4) 166 parts ethoxylated propoxylated trimethylolpropane of equivalent weight 2000. (All parts by weight). The values for Shore A durometer and trouser tear are presented in Table 1 and labelled B1-B4.

### Comparative Example C: Curing a Polyether Prepolymer with a Combination of a Conventional Diol and Triol

A toluenediisocyante polytetramethylene ether prepolymer (Adiprene L 83, supplied by Uniroyal Chemical Company, Inc.), with an isocyanate content of 3.25% was cured as follows: to 100 parts prepolymer was added 3.8 parts diethoxylated hydroquinone and 2 parts triisopropanolamine. In this example, 20 parts of tributoxyethylphosphate was also added as a plasticizer. The values for Shore A and Trouser Tear are preserited in Table 1.

### Example 1: (does not fall within the scope of the present invention) Curing a Polyether Prepolymer with Phenyldiethanolamine

One-hundred parts of the prepolymer of Comparative Example B was cured with 7.8 parts phenyldiethanolamine, available commercially from BASF or Henkel. The Shore A durometer and Trouser Tear results are reported in Table 1.

### Example 2: (does not fall within the scope of the present invention) Curing a Polyether Prepolymer with Phenyldiethanolamine and a triol

One-hundred parts of the prepolymer of Comparative Example B was cured with 6.5 parts phenyldiethanolamine and 0.6 parts triisopropanolamine. Eleven parts of dipropyleneglycol dibenzoate plasticizer was added. The Shore A durometer and Trouser Tear results are reported in Table 1.

### Example 3: (does not fall within the scope of the present invention) Curing a Polyether Prepolymer with Phenyldiethanolamine and a Triol

One-hundred parts of the prepolymer of Comparative Example C was cured with 4.9 parts phenyldiethanolamine and 1.0 parts triisopropanolamine. Ten parts of tributoxyethyl phosphate plasticizer was added. The Shore A durometer and Trouser Tear results are reported in Table 1.

### Example 4 a,b: Curing a Polyether Prepolymer with Phenyldiethanolamine, a Diol and a Triol

One-hundred parts of the prepolymer of Comparative Example C was cured with 2.1 parts phenyldiethanolamine, 1.7 parts 1,4-butanediol and 1.0 parts triisopropanolamine. Ten parts and twenty parts of tributoxyethyl phosphate plasticizer was added to Examples 4a and 4b, respectively. The Shore A durometer and Trouser Tear results are reported in Table 1.

**TABLE 1**

| TROUSER TEAR AND SHORE A HARDNESS VALUES FOR VARIOUS POLYURETHANE ELASTOMERS | | |
|---|---|---|
| Example Number | Shore A Durometer | Trouser Tear |
| A-1 | 30 | 14 |
| A-2 | 38 | 15 |
| A-3 | 46 | 14 |
| B-1 | 50 | 7.9 |
| B-2 | 59 | 7.6 |
| B-3 | 59 | 6.2 |
| B-4 | 32 | 10 |
| C | 45 | 19 |
| 1 | 47 | 66 |
| 2 | 46 | 40 |
| 3 | 49 | 60 |
| 4a | 46 | 51 |
| 4b | 30 | 34 |

The above data may be used to verify that fact that the materials tested possess good tear strength as well as low Shore A durometer values.

Table 2 summarizes the formulations of the invention and highlight the relative amounts of curatives utilized.

**TABLE 2**

| **PREPOLYMER TDI: PTMEG** | | | | **CURATIVE SYSTEM PARTS BY WEIGHT (WEIGHT RATIO)** | | |
|---|---|---|---|---|---|---|
| **Example** | **NCO%** | **Parts by Weight** | **Plasticizer (Parts by Weight)** | **PDEA** | **Triol** | **Diol** |
| 1 | 3.80 | 100 | 0 | 7.8 (100) | - (0) | - (0) |
| 2 | 3.80 | 100 | 11 | 6.5 (92) | 0.6 (8) | - (0) |
| 3 | 3.25 | 100 | 10 | 4.9 (83) | 1.0 (17) | - 0 |
| 4a | 3.25 | 100 | 10 | 2.1 (44) | 1.0 (21) | 1.7 (35) |
| 4b | 3.25 | 100 | 20 | 2.1 (44) | 1.0 (21) | 1.7 (35) |

This unique combination of properties, as provided by the curative systems of the instant invention, is of great economic importance to the providers of products using the polyurethane compositions of the instant invention.

The embodiments of the invention shown are meant to be illustrative and not limitative. Modifications of the examples and description are contemplated. So long as they are encompassed by the appended claims. Such modifications are part of the invention.

## Claims

1. A method of curing a non-aqueous tolylenediiisocyanate terminated polyether polyol prepolymer comprising:
(a) admixing an tolylenediiisocyanate terminated polyether polyol prepolymer with a curative comprising i) from 10 to 80 weight percent of a dihydroxy substituted C₁-C₁₈ alkyl, C₄-C₁₀ cycloalkyl, or aryl tertiary amine:
ii) from 10 to 40 weight percent short-chain diol; and
iii) from 10 to 20 weight percent short chain triol present in an amount sufficient to cure said tolylenediiisocyanate terminated polyether polyol prepolymer into a polyurethane having a Shore A durometer hardness of 20 to 60 as measured according to ASTM D-2240 and trouser tear values of 30 or higher as measured according to ASTM D-1938 to form an admixture, with the proviso that water is not present in said prepolymer; and
(b) subjecting said admixture to curing conditions.

2. The method of claim 1 wherein the curative comprises:
a) from 40 to 80 weight percent of phenyldiethanolamine;
b) from 10 to 40 weight percent short-chain diol; and
c) from 10 to 20 weight percent short chain triol.

3. The method of claim 1 wherein the amount of curative that is reacted with the polyether polyol prepolymer is present at a molar equivalent from 70 percent to 110 percent.

4. The method of claim 1 wherein the amount of curative that is reacted with the polyether polyol prepolymer is present at a molar equivalent from 85 percent to 100 percent.

5. The method of claim 1 wherein the amount of curative that is reacted with the polyether prepolymer is present at a molar equivalent from 90 percent to 98 percent.

6. A polyether prepolymer cured using the method of claim 1 wherein the polyurethane possess Shore A durometer values ranging from 30 to 50 and trouser tear values of 30 or higher.

7. The method of claim 1 wherein
a) said one or more short chain diols are selected from the group consisting of 1,4-butanediol, ethylene glycol, cyclohexanedimethylol, and 1,6-hexanediol; and
b) said one or more short chain triols are selected from the group consisting of trimethylolpropane, triisopropanolamine, triethanolamine, glycerol, ethylene oxide adduct of trimethylolpropane, trimethylolethane and the ethylene oxide adduct of trimethylolethane.

8. A method of claim 1 wherein said curative comprises phenyldiethanolamine as said dihydroxy substituted tertiary amine i); and ii) to i) plus iii) wherein the equivalent ratio of ranges from 0,2:1 to 2:1.

9. The method of claim 8 wherein equivalent ratio of the curative ranges from 0.2:1 to 1.75:1.

10. The method of claim 8 wherein equivalent ratio of the curative ranges from 0.4:1 to 1:1.

## Patentansprüche

1. Verfahren zur Härtung eines nichtwässrigen Polyetherpolyolpräpolymers mit endständigen Tolylendiisocyanatgruppen durch
(a) Vermischen eines Polyetherpolyolpräpolymers mit endständigen Tolylendiisocyanatgruppen mit einem Vulkanisationsmittel, das i) 10 bis 80 Gew.-% eines tertiären dihydroxysubstituierten C₁-C₁₈-Alkyl-, C₄-C₁₀-Cycloalkyl- oder Arylamins; ii) 10 bis 40 Gew.-% eines kurzkettigen Diols; und iii) 10 bis 20 Gew.-% eines kurzkettigen Triols umfasst und das in einer ausreichenden Menge vorhanden ist, um das Polyetherpolyolpräpolymer mit endständigen Tolylendiisocyanatgruppen zu einem Polyurethan mit einer Shore-A-Durometerhärte von 20 bis 60 gemäß Messung nach ASTM D-2240 und Schenkel-Weiterreißwerten von 30 oder mehr gemäß Messung nach ASTM D-1938 zu härten, zur Herstellung eines Gemisches, wobei gilt, dass Wasser in dem Präpolymer nicht vorhanden ist; und
(b) Einwirkenlassen von Härtungsbedingungen auf das Gemisch.

2. Verfahren nach Anspruch 1, wobei das Vulkanisationsmittel die folgenden Bestandteile umfasst:
(a) 40 bis 80 Gew.-% Phenyldiethanolamin;
(b) 10 bis 40 Gew.-% kurzkettiges Diol und
(c) 10 bis 20 Gew.-% kurzkettiges Triol.

3. Verfahren nach Anspruch 1, wobei die Vulkanisationsmittelmenge, die mit dem Polyetherpolyolpräpolymer umgesetzt wird, -ausgedrückt in Moläquivalenten - 70 bis 110 % beträgt.

4. Verfahren nach Anspruch 1, wobei die Vulkanisationsmittelmenge, die mit dem Polyetherpolyolpräpolymer umgesetzt wird, -ausgedrückt in Moläquivalenten - 85 bis 100 % beträgt.

5. Verfahren nach Anspruch 1, wobei die Vulkanisationsmittelmenge, die mit dem Polyetherpolyolpräpolymer umgesetzt wird, -ausgedrückt in Moläquivalenten - 90 bis 98 % beträgt.

6. Nach dem Verfahren von Anspruch 1 gehärtetes Polyetherpräpolymer, wobei das Polyurethan Shore-A-Durometerhärtewerte von 30 bis 50 und Schenkel-Weiterreißwerte von 30 oder mehr besitzt.

7. Verfahren nach Anspruch 1, wobei
das eine oder die mehreren kurzkettigen Diole aus 1,4-Butandiol, Ethylenglykol, Cyclohexandimethylol und 1,6-Hexandiol und
das eine oder die mehreren kurzkettigen Triole aus Trimethylolpropan, Triisopropanolamin, Triethanolamin, Glycerin, Ethylenoxidaddukten von Trimethylolpropan, Trimethylolethan und den Ethylenoxidaddukten von Trimethylolethan ausgewählt sind.

8. Verfahren nach Anspruch 1, wobei das Vulkanisationsmittel Phenyldiethanolamin als das tertiäre dihydroxysubstituierte Amin i) umfasst und wobei das Äquivalentverhältnis ii):i) und iii) 0,2:1 bis 2:1 beträgt.

9. Verfahren nach Anspruch 8, wobei das Äquivalentverhältnis des Vulkanisationsmittels in einem Bereich von 0,2:1 bis 1,75:1 liegt.

10. Verfahren nach Anspruch 8, wobei das Äquivalentverhältnis des Vulkanisationsmittels in einem Bereich von 0,4:1 bis 1:1 liegt.

## Revendications

1. Procédé de vulcanisation d'un prépolymère de polyéther-polyol terminé par un groupe tolylènediisocyanate non aqueux comprenant les étapes consistant à :
(a) mélanger un prépolymère de polyéther-polyol terminé par un groupe tolylènediisocyanate avec un agent de vulcanisation comprenant i) de 10 à 80 pour cent en poids d'une amine tertiaire d'alkyle en C₁-C₁₈, cycloalkyle en C₄-C₁₀ ou aryle substituée au dihydroxy ;
ii) de 10 à 40 pour cent en poids de diol à chaînes courtes ; et
iii) de 10 à 20 pour cent en poids de triol à chaînes courtes, présent en une quantité suffisante pour vulcaniser ledit prépolymère de polyéther-polyol terminé par un groupe tolylènediisocyanate en un polyuréthanne ayant une dureté au duromètre Shore A de 20 à 60 mesurée selon l'ASTM D-2240 et des valeurs de déchirement d'éprouvette pantalon de 30 ou plus mesurées selon l'ASTM D-1938, pour former un mélange, à condition que ledit prépolymère ne contienne pas d'eau ; et
b) soumettre ledit mélange à des conditions de vulcanisation.

2. Procédé selon la revendication 1, dans lequel l'agent de vulcanisation comprend :
a) de 40 à 80 pour cent en poids de phényldiéthanolamine ;
b) de 10 à 40 pour cent en poids de diol à chaînes courtes ; et
c) de 10 à 20 pour cent en poids de triol à chaînes courtes.

3. Procédé selon la revendication 1, dans lequel la quantité d'agent de vulcanisation qui est mis à réagir avec le prépolymère de polyéther-polyol est présente à un équivalent molaire de 70 pour cent à 110 pour cent.

4. Procédé selon la revendication 1, dans lequel la quantité d'agent de vulcanisation qui est mis à réagir avec le prépolymère de polyéther-polyol est présente à un équivalent molaire de 85 pour cent à 100 pour cent.

5. Procédé selon la revendication 1, dans lequel la quantité d'agent de vulcanisation qui est mis à réagir avec le prépolymère de polyéther-polyol est présente à un équivalent molaire de 90 pour cent à 98 pour cent.

6. Prépolymère de polyéther vulcanisé en utilisant le procédé selon la revendication 1, dans lequel le polyuréthanne possède des valeurs de duromètre Shore A dans la plage de 30 à 50 et des valeurs de déchirement d'éprouvette pantalon de 30 ou plus.

7. Procédé selon la revendication 1, dans lequel
a) lesdits un ou plusieurs diols à chaînes courtes sont choisis dans le groupe constitué par le 1,4-butanediol, l'éthylène glycol, le cyclohexanediméthylol et le 1,6-hexanediol ; et
b) lesdits un ou plusieurs triols à chaînes courtes sont choisis dans le groupe constitué par le triméthylolpropane, la triisopropanolamine, la triéthanolamine, le glycérol, le produit d'addition à l'oxyde d'éthylène du triméthylolpropane, le triméthyloléthane et le produit d'addition à l'oxyde d'éthylène du triméthyloléthane.

8. Procédé selon la revendication 1, dans lequel ledit agent de vulcanisation comprend de la phényldiéthanolamine en tant que ladite amine tertiaire subsituée au dihydroxy i) ; et dans lequel le rapport en équivalents de ii) sur i) plus iii) est dans la plage de 0,2/1 à 2/1.

9. Procédé selon la revendication 8, dans lequel le rapport en équivalents de l'agent de vulcanisation est dans la plage de 0,2/1 à 1,75/1.

10. Procédé selon la revendication 8, dans lequel le rapport en équivalents de l'agent de vulcanisation est dans la plage de 0,4/1 à 1/1.
